# EUROPEAN PATENT SPECIFICATION

(11) **EP 1 636 986 B1**
(45) Date of publication and mention of the grant of the patent: **21.02.2007**
(21) Application number: 04736434.4
(22) Date of filing: 09.06.2004
(51) Int. Cl.: H04N 5/74, G03B 21/28

(54) **DEVICE FOR SIMULTANEOUSLY PROJECTING IMAGES AND ILLUMINATING THE AMBIENT**
GERÄT ZUR GLEICHZEITIGEN BILDPROJEKTION UND RAUMBELEUCHTUNG
DISPOSITIF PERMETTANT SIMULTANEMENT DE PROJETER DES IMAGES ET D'EMETTRE UNE LUMIERE D'AMBIANCE

(30) Priority: 12.06.2003 EP 03101714
(43) Date of publication of application: 22.03.2006
(73) Proprietor: Koninklijke Philips Electronics N.V., 5621 BA Eindhoven (NL)
(72) Inventor: ULLMANN, Paul, A-1101 Vienna (AT)
(74) Representative: Damen, Daniel Martijn
(86) International application number: PCT/IB2004/050877
(87) International publication number: WO 2004/112386

(56) References cited:
- EP-A- 0 560 125
- PATENT ABSTRACTS OF JAPAN vol. 0185, no. 32 (P-1810), 7 October 1994 (1994-10-07) & JP 6 186523 A (MATSUSHITA ELECTRIC IND CO LTD), 8 July 1994 (1994-07-08)
- PATENT ABSTRACTS OF JAPAN vol. 1996, no. 02, 29 February 1996 (1996-02-29) & JP 7 264527 A (HITACHI LTD), 13 October 1995 (1995-10-13)

## Description

The invention relates to a device for projecting images onto a projection surface, which device has electro-optical means for generating and emitting light on the basis of image data, and an optical system for directing the light onto the projection surface, which optical system has movable redirecting means for the light.

There is known from patent document JP 06-180447 A a device that is designed to project images in a projection mode or to illuminate a room in an illumination mode, as desired. The change between the projection mode and the illumination mode is accomplished by means of pairs of mirrors comprising two mirrors, with one mirror in each pair of mirrors of this kind being arranged to be hingeable. In the illumination mode, the hingeable mirrors are pivoted out of the beam path of the light, and beams of light of the three primary colors red, green and blue are beamed out by means of the rest of the mirrors, at different intensities depending on the control exerted. It is true that illumination of a room that is modulated as desired can be obtained in this way, but this illumination is only obtainable as an alternative to the image projection and not simultaneously with the latter, which is a disadvantage.

It is therefore an object of the invention to propose a device for projecting images as specified above, in which device specific illumination can be obtained in the room simultaneously with the projection or reproduction of images, of a video film, say. In addition, a technique is to be provided by which the so-called "Cinemascope" strips (the strips that appear at the top or bottom edge of the image when video films that have an aspect ratio of 9:16 are reproduced in a 3:4 format) can be reduced or totally avoided in the reproduction of the images, the space that is thereby gained in the image format being used for other purposes.

In particular, the present invention endeavors to provide a technique in which the specific additional illumination that is produced is related to the content of the images or to the information provided by them and boosts it visually.

As a particular preference, provision is made in this case for the ambience "mood" able to be obtained by means of the specific illumination to be capable of being produced by automatic analysis of the content of the images or, if desired, of an audio-signal content, apart from by pre-programmed sequences. Ambience illumination of this kind is then also to be used, apart from being used simply to light the room, to fill in parts of the projected images, these parts of the images being obtained by removing the Cinemascope strips from the images.

The invention thus provides a device as defined in claim 1.

There is thus available in the present device for projecting images, in addition to the redirecting part of the redirecting means that is used for image projection, a separate light-transmitting part for the selective ambience light projection that is being aimed at. Because of its design, this separate light-transmitting part is easily able to provide light transmission in a special form, by, say, splitting the light into the colors of the spectrum, without any further action being taken on the beams of light to be projected. Light acted on in such a manner can be beamed out into the room by the separate light-transmitting part as illumination, but it can also be transmitted onto the projection surface to supplement the images that are being projected onto the surface. Because this ambience light projection does not always have to take place, provision may with advantage be made for only the redirecting part for image projection to be active in one basic operating position, whereas in another basic operating position the separate light-transmitting part for ambience light projection is active in addition to the redirecting part for image projection.

In a particularly simple embodiment, the redirecting means comprise a pivotable redirecting mirror whose redirecting part is designed to be reflective and is arranged adjacent the separate light-transmitting part. The separate light-transmitting part may be present in this case in the form of a narrow strip of, say, a height that corresponds to the combined height of the two Cinemascope strips in an image, and it can preferably be designed to be only refractive. If the redirecting mirror is suitably adjusted relative to the incident beam of light then, if the image is moved vertically, e.g. downwards, on the projection surface as appropriate so that an area corresponding in size to two Cinemascope strips remains clear at the top, an ambience light projection of this kind can be performed within the image projection by, in addition, producing room illumination by means of the separate light-transmitting part, in the opposite direction to the projected image. Furthermore, the separate light-transmitting part may be formed by a semi-transparent mirror, to allow backward room illumination to be obtained and, in addition, mood light to be obtained on the projection surface.

It should be mentioned here that a technique for causing the Cinemascope strips to appear in a form that is less of a nuisance when a 9:16 video film is being shown in a format in which the aspect ratio is different has already been described in patent document JP 08-314421 A. For this purpose, the Cinemascope strips are shown not as they usually are in black but in color. This, however, still produces the two annoying strips at the top and bottom edges of the image.

Basically, the image transmission touched on above could be achieved by setting the redirecting means to a special position, in such a way that, for example, the bottom Cinemascope strip struck the redirecting means clear of the redirecting part and consequently was not redirected. However, for convenient image projection it is better if the electro-optical means have image displacement means for electronic displacement of the images to be projected in the latter's height direction.

To enable any desired patterns of light that are modulated in respect of intensity, color and duration to be produced, provision may, with advantage, also be made for the electro-optical means to have light-pattern generating means for part-images in strip form, which light-pattern generating means produce the ambience light projection. It has also proved to be advantageous in this case if combining means for combining or uniting the images that have been displaced in their height direction and the part-images in strip form to form combined or united images that can be transmitted via the optical system. The part-images in strip form then strike the redirecting mirror at the separate light-transmitting part, whereas the displaced images, i.e. the desired images in, say, a video film (with no Cinemascope strips) strike the redirecting part. In this way, the desired combining of desired images and ambience light projection can be achieved automatically without any laborious adjustment of the redirecting mirror or, in general terms, of the redirecting means.

To enable the light pattern generated to be modulated in the desired way in this case, the light-pattern generating means are preferably connected to control means for setting parameters of the light pattern. These control means may be fitted with a processor and a memory, to enable particular sequences stored in the memory to be made available when the light patterns are being generated. It is particularly advantageous, however, if the control means are connected to an image analyzer that analyzes the image data and if they are arranged to transmit control signals to the light-pattern generating means as a function of the image analysis carried out by the image analyzer; or if the control means are connected to an audio-signal analyzer that is arranged to analyze audio data, then the control means are arranged to transmit control signals to the light-pattern generating means as a function of the analysis of the audio data. In this way, matched ambience illumination and light projection can be obtained automatically by analyzing the images or audio signals to be reproduced.

The device according to the invention may be constructed as a table-top unit but is preferably in the form of a floor-standing unit for setting up in a room.

These and other aspects of the invention are apparent from and will be elucidated with reference to the embodiments described hereinafter, though it is not to be considered as limited to these embodiments.

### In the drawings:

Fig. 1 is a diagrammatic view of a device for projecting images onto a wall of a room, which device is in the form of a floor-standing unit.

Fig. 2 is an entirely diagrammatic vertical cross-section showing the top part of the device for projecting images.

Fig. 3 is a diagrammatic block diagram showing the electronic and optical means of the device.

Figs. 4A and 4B are diagrammatic views of images of the kind that are obtained in prior art devices at a light source of the electronic means (Fig. 4A) and at the projection surface (Fig. 4B).

Figs. 5A and 5B are views, corresponding to those in Figs. 4A and 4B, of images when the invention is applied.

Fig. 6 is a block circuit diagram showing in greater detail electronic analyzing and control means used in the electronic means of the device.

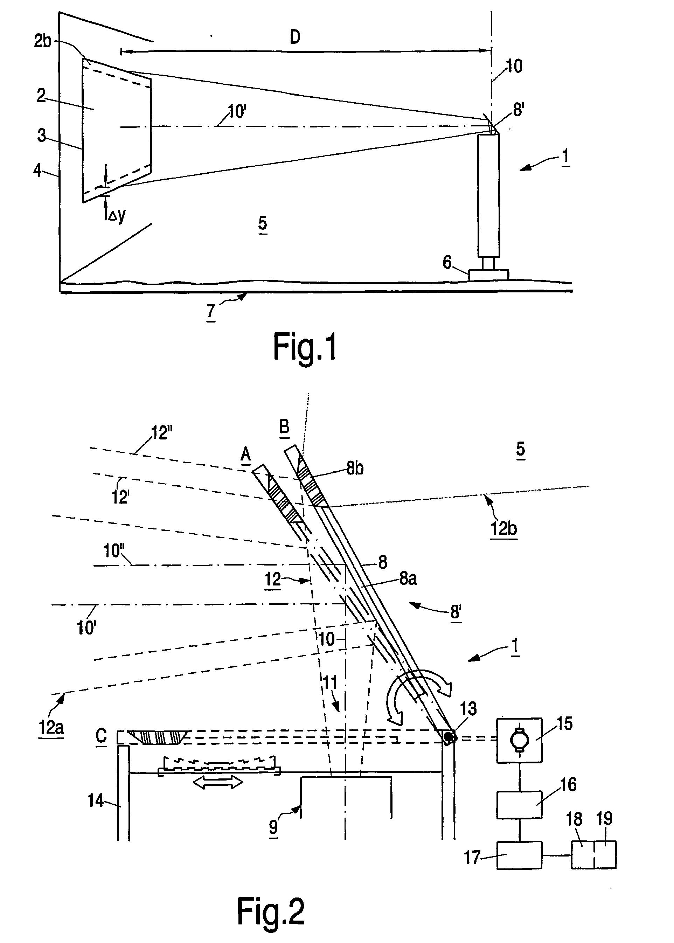

Shown in Fig. 1 is a device 1 for projecting images 2 onto a projection surface 3 on a wall 4 of a room 5, which projection surface 3 is situated at a distance D. The device 1 is in the form of a floor-standing unit having a base 6, for setting up on the floor 7 of the room 5, as is known per se. Devices of this kind for projecting images, which will be referred to below as projectors for short, are being increasingly used in home cinema systems, in which case the projectors use a wide variety of techniques for generating the beams of light required for the image formation, i.e, projection, such as, say, cathode-ray tubes or LCD panels. Another field of application is projectors for presentation purposes. The image data, and audio data too where appropriate, can be fed to the projectors electronically from a PC that is connected on-line or from reproduction stations such as CD players or DVD players, or directly from an Internet connection. The supply of the video and audio data may also be performed wirelessly via an antenna input, in which case the electronic means of the projector then include audio and video input stages having a tuner etc., as is usual per se. Such items are all sufficiently well known and there is therefore no need for them to be described in detail here.

The images 2 to be projected are projected to the wall 4 by the present projector 1 by means of a redirecting means 8' (see Fig. 2) that forms part of an optical system 9 of the projector 1 and that is in the form of a redirecting mirror 8 having a reflecting part 8a, in which case the redirecting mirror 8 may make an angle of approximately 45° with the horizontal in a first, active redirecting position or basic operating position A that is shown in dotted and dashed lines in Fig.2. Because it is in the form of a floor-standing unit, the present projector 1 is arranged internally to have a vertical beam path, i.e. a vertical main optical axis 10, and is of a suitable height, of the order of 1.5 m to 2 m, say, to ensure that the images 2 can be projected satisfactorily to the wall 4. The redirecting mirror 8 is constructed in the form of a pivoting mirror and, in a horizontal position C to which, in the views shown in Figs. 1 and 2, it is pivoted down in the counterclockwise direction, it rests on the top of the projector 1 as a hinged cover and when there closes off an exit opening 11 for the light. In the horizontal position C, the redirecting mirror 8 protects components inside the projector 1 from dust, dirt, etc. In the redirecting operating position A on the other hand, the redirecting mirror 8 allows the vertical position of the image 2 at the wall 4 to be exactly set with its reflecting part 8a, in which case a shielding means, a cinema screen, etc. may, if required, be provided on the wall 4 as a projection surface proper 3. The said vertical positioning of the image at the wall 4 is thus performed by fine adjustment of the angle of inclination of the redirecting mirror 8, which means that there is no need for the height of the projector 1 as a whole to be adjusted. In the case of an adjustment of inclination of this kind, it is also known (see for example US 2002/0105623 A), for a keystone correction to be made on the basis of the angle of inclination of the redirecting mirror 8 by means of correctional algorithms.

As well as for conventional wall projection of this kind, the present projector 1 is also set up to produce selective ambience light projection, thus creating an additional possible application for the projector 1 formed by, for example, special ambience illumination of the room 5. This ambience light projection can be used to project images similar to the images projected onto the wall 4 but it is equally possible to bring about light projection into the room 5 for producing particular light "moods" in the room 5. Light projections of this kind can, basically, be used to divert and relax people, but what they are preferably used for is to create an ambience "atmosphere" of light matched to the images 2 being projected, thus producing in the room 5 a special ambience when for example a video film or a film of a musical or video clips are being watched.

To produce this selective ambience light projection, the redirecting mirror 8 has, adjacent the redirecting part 8a, a separate light-transmitting part 8b, which separate light-transmitting part 8b is inactive when the pivoting mirror 8 is in the first active operating position A but, when the latter is in a second active operating position B that is shown in solid lines in Fig. 2, is covered by a cone of light 12, which cone of light 12 originates from the optical system 9 of the projector 1. This separate light-transmitting part 8b is arranged to be refractive of light in this case, and it is arranged in the form of a strip adjacent the redirecting part 8a, e.g. above the latter in the operating position B. Due to the refractive behavior of the separate light-transmitting part 8b, a corresponding strip of light is allowed through to the other side of the redirecting mirror 8 (see the cone of light 12b in Fig. 2). This cone of light 12b, or in general terms this light projection into the room 5, produces the ambience illumination touched on above, in which case this effect is obtained simultaneously with the image projection proper. It may be mentioned that the separate light-transmitting part 8b may take the form of a semi-transparent mirror that is arranged to be both refractive of light and reflective of light; when this is the case, a part-image 2b in strip form can then be projected onto the projection surface 3 at the wall 4 above the image proper 2 (see Fig. 1) by means of the separate light-transmitting part 8b (see also the associated boundary rays 12' and 12" in Fig. 2), and at the same, due to the fact that the separate light-transmitting part 8b is in the form of a semi-transparent mirror having refractive properties, a corresponding strip of light is allowed through to the other side of the redirecting mirror 8 (see once again the cone of light 12b in Fig. 2). In both cases, the image produced and projected is situated higher by an amount ? y (see Fig. 1) (in line with the difference between the two angles to which the redirecting mirror 8 is pivoted in the basic operating positions A and B) than in the case of image projection alone where the redirecting mirror 8 is situated in the first basic operating position A (see also in this connection the respective optical axes 10' and 10" after redirection at the redirecting mirror 8 in the basic operating positions A and B in Fig. 2).

Also shown schematically in Fig. 2 is a pivot mounting 13 for the redirecting mirror 8 that is provided on the housing 14 of the projector 1, laterally of the exit opening 11 for the light.

The redirecting mirror 8 can, basically, be pivoted manually, in which case it is conceivable for the pivot mounting 13 to be arranged to be relatively stiff, so that the redirecting mirror 8 remains fixed by frictional engagement in any position to which it is set. Adjustable stop means or detent means may, if required, be provided for exact positioning in the basic operating positions A and B.

It is preferable however for a motorized drive to be provided for the redirecting mirror 8, in the form, say, of an electric motor 15 that is associated with the redirecting mirror 8 at the pivot mounting 13 (see Fig. 2) and that has an output gearbox, in which case this drive motor 15 may, for example, drive a toothed sector or a pinion (not shown) that is connected to the redirecting mirror 8 or a shaft thereof to be solid in rotation therewith. Also, an angle encoder means may be provided to give an exact angular position. Motorized drives of this kind to allow a mirror to be repositioned to an exact angle are well known to those skilled in the art and there is therefore no need for them to be gone into in detail here.

A further motor, which is not shown in the drawings, may be provided for automatic focusing of the optical system 9. Like the motor 15 for the redirecting mirror 8, this motor too may be operated by a motor driver circuit 16 (see Fig. 2), the input of which motor driver circuit 16 is connected to a motor control circuit 17. The motor control circuit 17 is connected to an input module 18 for operator inputs, in which case this input module 18 may for example comprise electronic selecting means 19 to enable the redirecting mirror 8 to be controlled automatically to the appropriate operating position A or B (by means of the motor control circuit 17, the motor driver circuit 16 and the motor 15) when either conventional image projection or image projection with selective ambience light projection is selected.

The input module 18 may in addition be provided with other inputs such as, say, for manually controlled focusing of the optical system 9.

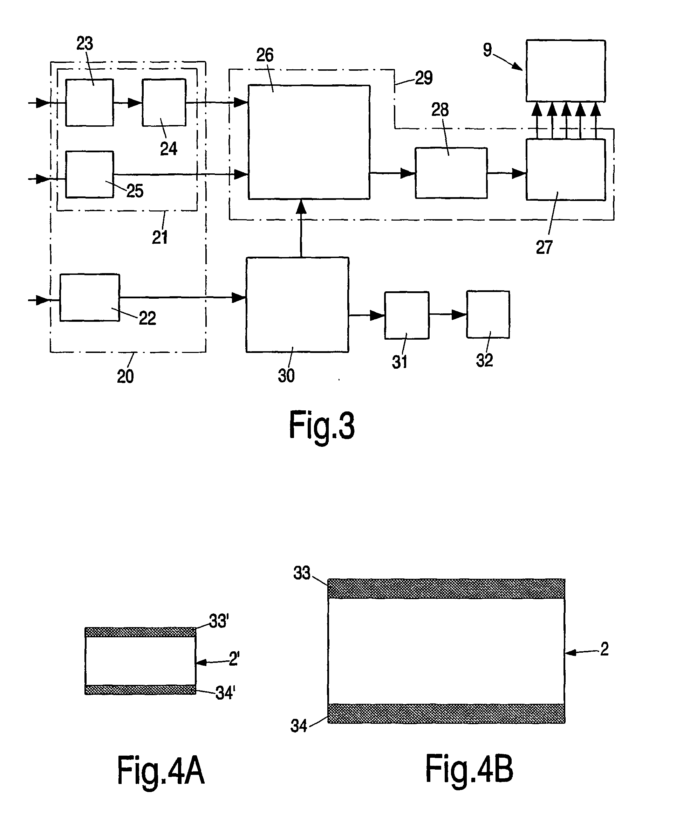

In Fig. 3 is shown what in general terms is an input unit 20, which includes the above-mentioned input module 18 and also a video input module 21 and an audio input module 22. Connected downstream of the video input manual 21, which has for example an analog video input stage 23 with a downstream A/D converter stage 24 and, in parallel therewith, a digital video input stage 25, is a digital signal processor circuit (video DSP) 26, to enable corresponding image data for the control of a light source 27 via a driver circuit 28 to be obtained in a basically conventional manner from the incoming digital, or initially analog and digitized, video input signal. As mentioned, the light source 27 may, for example, be implemented by means of an LCD panel. This being the case, electro-optical means 29 for image generation are formed by these components.

In a similar way, an audio signal processor unit (audio DSP) 30, which drives a loudspeaker 32 via a multi-channel amplifier 31, is connected to the audio input module 22.

In the digital signal processors 29, 30, an analysis of the video and audio signals may be performed such that light effects corresponding to preprogrammed analyses can be generated from them in the case of "ambience illumination". Preferably, matching patterns of light in suitable colors and at suitable intensities and in suitable sequences over time are generated directly from analyses of the video and audio signals. In this way, where the audio signal is dance music for example, lightning-like light effects in different colors can be produced automatically in the room 5 to encourage a party mood.

On the other hand, it is also possible with the present projector 1, as was explained above in connection with Figs. 1 and 2, for a part-image 2b in strip form to be added to the projected image 2. With this part-image 2b in strip form, the image 2 can be padded up as a whole to a standard modem-day image format with an aspect ratio of, for example 9:22, the usual Cinemascope strips then being removed. As has already been indicated in the introduction, strips of this kind, usually black, occur as a result of the different aspect ratios in video films, the 3:4 aspect ratio being best for video films, but even the far more usual and more up-to-date aspect ratio of 9:16 is still not ideal because video films in a wide 9:22 format are more and more frequently becoming available. If such wide image formats are to be reproduced, and if the technologies employed in normal projectors are used for the less good and not so wide image formats, the result is the well known black strips at the top and bottom edges, the "Cinemascope" strips. These Cinemascope strips are noticeable and a nuisance even when the images 2 are projected onto a projection surface 3. This is the situation that is shown schematically in Figs. 4A and 4B, where Fig. 4A shows an image 2' generated by the light source 27 (see Fig. 3) that has Cinemascope strips 33', 34', and Fig. 4B shows the projected image 2 (see also Fig. 1) that has gray-black Cinemascope strips 33, 34.

Steps have therefore been taken in the present projector 1 to eliminate these Cinemascope strips 33, 34 virtually entirely, in which case use is made in place of them of the above-mentioned selective ambience light projection having the part-image 2b in strip form of a height equal to the height displacement ? y in Fig. 1, namely equal to the height of the two Cinemascope strips 33, 34 together.

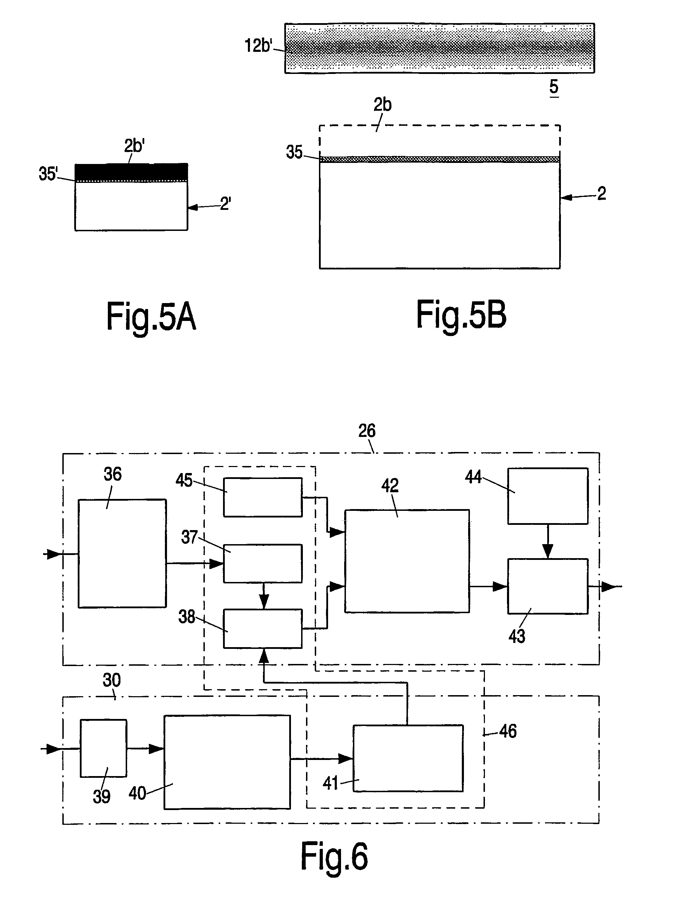

This is shown schematically in Figs. 5A and 5B, with Fig. 5A once again showing the image 2' generated directly at the light source 27 and Fig. 5B showing the image 2 at the wall 4. In detail, what is done in this case is that a displacement of the image proper downwards (in relation to the projected image), in its height direction, is carried out electronically in the electro-optical means 29 (see Fig. 3), the aspect ratio being maintained. At the top edge of the image 2', this produces a reproducing area 2b' in strip form that is separated from the image proper by a separating region 35'. The separating region 35' is relatively narrow in this case, as is shown in Figs. 5A and 5B.

The projected image 2 then contains the video image that is to be reproduced, in the desired aspect ratio, which is 9:22 say, and the narrow strip formed by the separating region 35 is again situated at the top edge. Also, situated above it, if the separate light-transmitted section 8b is, as mentioned, also arranged to be reflective, there is a projected strip, namely the above-mentioned part-image 2b in strip form.

It should again be mentioned that it may often be beneficial for this reflection of the part-image 2b to be omitted, i.e. for the separate light-transmitting part 8b to be arranged to be not reflective but merely refractive, in which case the boundary ray 12' shown in Fig.2 will already form the upper boundary of the image projection and there will not be a boundary ray 12".

What is then obtained as ambience illumination in the room (see the cone of light 12b in Fig. 2), is a corresponding pattern of light, which pattern of light is shown in Fig. 5B as a strip of projected light 12b' of different gradations. This ambience illumination in the room 5 can be generated with the help of the video signal processor 26 shown in Fig. 3, and the downward displacement of the image may likewise be accomplished electronically in the video signal processor 26, as will now be explained in detail by reference to Fig. 6.

As shown in Fig.6, the video signal processor 26 contains a video-signal image analyzer 36 of conventional design, this image analyzer 36 being able to analyze for example dynamic changes in light, predominant colors, the speed of movement in a video film and even the time between vision switches in the video film. What the image analyzer 36 produces as the outcome of its analysis of the image data is corresponding feature vectors that are fed to a recognition and classifying unit 37 so that they can be analyzed there, compared with, for example, corresponding stored values for the individual parameters, and classified in the appropriate way. In a downstream audio/video correlating unit 38, the analyzed data obtained in this way is correlated with analyzed data obtained in a corresponding manner from the audio signal DSP 30.

In detail, the audio signal DSP too may, after initial multi-channel decoding in a decoding stage 39, carry out a signal analysis in an audio signal analyzer proper 40 by, say, parameters such as spectral energy, temporal envelope curves, dynamic range, volume, tempo and beat, and corresponding feature vectors, which represent the outcome of the audio data analysis, are once again analyzed and classified in an audio-signal recognition and classifying unit 41. After this, the analyzed data that has been obtained in this way is fed to the correlating unit 38. The recognition of the nature of the scenes that have just been reproduced is improved by a correlation that is carried out in the correlating unit 38.

It should be mentioned that there are basically various algorithms for video and audio signal analysis, with the feature vectors that are generated giving the intensity or significance of the particular desired parameters in the audio or video signal. By means of assigning algorithms, the significance of all the inputs is checked in the recognition and classifying units 37 and 41 to allow an estimate to be made in this way of the nature of sequences of images and sounds respectively.

As shown in Fig. 6, connected to the correlating unit 38 are light-pattern generating means 42 that generate a two-dimensional pattern of light on the basis of the correlated data fed to them, with due allowance for pre-programmed stipulations. After control of the light source 27 and after projection, this pattern of light results in the above-mentioned part-image 2b or in the ambience illumination 12b' that are shown in Fig. 5B. For this purpose, the pattern of light generated in the light-pattern generating means 42 is combined or united, with the help of electronic combining means 43, with the image proper, this being done after the latter has been displaced vertically in electronic image displacement means 44.

In this way the image projection, i.e. the reproduction of video films for example, can be combined with mood light, as exemplified by the above-mentioned ambience light projection, the mood light being modulated as a function of the projected images and also of the audio signal that has just been reproduced. A modulation of the light can also be laid down via external inputs, such as via a preprogrammed sequence that is input or selected by a person by way of the input unit 45. Like the components 37, 38 and 41, the input unit 45 thus forms part of the control means 46 for the light-pattern generating means 42.

If automatic projection of mood light is desired, it can be analyzed, i.e. determined, with the help of the video and audio signal analyzers 36 and 40 whether it is dynamic scenes that are being reproduced at the time in the film being shown, i.e. whether fast sequence of images are occurring, or whether it is that action scenes are being reproduced, in which vision switches usually follow one another in swift succession and shots, explosions or the like are reproduced in the associated audio signal, or whether it is quiet, static scenes that are being shown. Colors of light can be selected that each match the images and audio signals that have just been reproduced, and the brightness or colors of the light can be pulsed in order in this way to boost the mood by means of this ambience background illumination and for example to increase the drama of dynamic scenes in films. It is also conceivable for a distinction to be made between the left and right hand sides in the strip of projected light 12b' (see Fig. 5B) and in this way for the projected light to be separately modulated spatially as well, as a function of what is happening in the film being watched. If, for example, an explosion is shown on the left-hand side in the sequence of images that has just been reproduced at the time, a pulse of red light could be generated in a similar way on the left-hand side of the strip of projected light 12b'.

To generate the pattern of light, it is also conceivable for appropriate light-pattern data to be incorporated or encoded in advance in the image data and for it to be fed to the video signal processor 26 in the stream of data. The advantage of advance encoding of this kind is that no estimation is then needed of the processes occurring at the time in image and sound, and the generation of the pattern of light is considerably simplified in this way because the lighting effects have already been included, in a film studio, for example.

What is of advantage in the case of the present technique is thus the fact that ambience illumination becomes possible simultaneously with image projection without the need for an additional light source and the ambience illumination can be varied in respect of intensity and color in the most varied ways and in particular as a function of the image and sound information that has just been reproduced at the time.

A remote control can be provided in the usual way for the individual settings, i.e. for the inputs to the input unit 20, and in particular for the individual actuating means for the motors in this case.

## Claims

1. A device (1) for projecting images (2) onto a projection surface (3), which device (1) has electro-optical means (29) for generating and emitting light on the basis of image data, an optical system (9) for projecting an image-bearing beam of light, and means (8') for redirecting the beam of light onto the projection surface (3), **characterised in that** said redirecting means (8') comprise a redirecting section (8a) for the image projection and a light-transmitting section (8b) for ambience light projection each one of said sections (8a, 8b) intercepting a respective, different portion of the beam of light.

2. A device (1) as claimed in claim 1, wherein the redirecting means (8') are movable between two basic operating positions (A, B), only the redirecting section (8a) for the image projection being active in one basic operating position (A) and the separate light-transmitting section (8b) for the ambience light projection being active in addition to the redirecting section (8a) for the image projection in the other basic operating position (B).

3. A device (1) as claimed in claim 1, wherein the redirecting means (8') comprise a pivotable redirecting mirror (8) wherein the redirecting section (8a) is designed to be reflective and is arranged adjacent the separate light-transmitting section (8b).

4. A device (1) as claimed in claim 3, wherein the separate light-transmitting section (8b) is formed by a semi-transparent mirror.

5. A device (1) as claimed in claim 1, wherein the separate light-transmitting section (8b) is in the form of a refractive element.

6. A device (1) as claimed in claim 1, wherein the electro-optical means (29) have image displacing means (44) for the electronic displacement of the images (2') being projected in the latter's height direction.

7. A device (1) as claimed in claim 1, wherein the electro-optical means (29) have light-pattern generating means (42) for generating part-images (2b') for the ambience light projection.

8. A device (1) as claimed in claim 6 or claim 7, wherein combining means (43) are provided for combining the images (2') that have been displaced in their height direction and the part-images (2b') to form combined images (2, 2b), which combined images (2, 2b) are transmissible via the optical system (9).

9. A device (1) as claimed in claim 7, wherein the light-pattern generating means (42) are connected to control means (46), which control means (46) are designed to set light-pattern parameters.

10. A device (1) as claimed in claim 9, wherein the control means (46) are connected to an image analyzer (36) designed to analyze image data, and wherein the control means (46) are designed to transmit control signals to the light-pattern generating means (42) as a function of the result, that is supplied by the image analyzer (36), of an analysis of the image data.

11. A device (1) as claimed in claim 9, wherein the control means (46) are connected to an audio-signal analyzer (40) that is designed to analyze audio data, and wherein the control means (46) are designed to transmit control signals to the light-pattern generating means (42) as a function of the result, that is supplied by the audio-signal analyzer (40), of an analysis of the audio data.

12. A device (1) as claimed in claim 1, wherein the device (1) is constructed as a floor-standing unit for setting up in a room (5).

## Patentansprüche

1. Gerät (1) für das Projizieren von Bildern (2) auf eine Projektionsfläche (3), wobei das Gerät (1) elektro-optische Mittel (29) für die Erzeugung und die Emission von Licht auf der Basis von Bilddaten und ein optisches System (9) für das Projizieren eines bildtragenden Lichtstrahls sowie Mittel (8') für das Umlenken des Lichtstrahls auf die Projektionsfläche (3) enthält, **dadurch gekennzeichnet, dass** die Umlenkmittel (8') einen Umlenkabschnitt (8a) für die Bildprojektion und einen Lichtübertragungsabschnitt (8b) für die Milieulichtprojektion aufweisen, wobei jeder der Abschnitte (8a, 8b) einen jeweiligen, unterschiedlichen Anteil des Lichtstrahls auffängt.

2. Gerät (1) nach Anspruch 1, wobei die Umlenkmittel (8') zwischen zwei Hauptarbeitsstellungen (A, B) beweglich sind, wobei in einer Hauptarbeitsstellung (A) nur der Umlenkabschnitt (8a) für die Bildprojektion aktiv ist und in der anderen Hauptarbeitsstellung (B) der separate Lichtübertragungsabschnitt (8b) für die Milieulichtprojektion zusätzlich zu dem Umlenkabschnitt (8a) für die Bildprojektion aktiv ist.

3. Gerät (1) nach Anspruch 1, wobei die Umlenkmittel (8') einen drehbaren Umlenkspiegel (8) aufweisen, wobei der Umlenkabschnitt (8a) so ausgelegt ist, dass er reflektiert, und er benachbart zu dem separaten Lichtübertragungsabschnitt (8b) angeordnet ist.

4. Gerät (1) nach Anspruch 3, wobei der separate Lichtübertragungsabschnitt (8b) durch einen halbdurchlässigen Spiegel gebildet wird.

5. Gerät (1) nach Anspruch 1, wobei der separate Lichtübertragungsabschnitt (8b) die Form eines lichtbrechenden Elements hat.

6. Gerät (1) nach Anspruch 1, wobei die elektro-optischen Mittel (29) Bildverschiebungsmittel (44) für die elektronische Verschiebung der projizierten Bilder (2') in ihrer Höhenrichtung enthalten.

7. Gerät (1) nach Anspruch 1, wobei die elektro-optischen Mittel (29) Lichtmustererzeugungsmittel (42) zum Erzeugen von Teilbildern (2b') für die Milieulichtprojektion aufweisen.

8. Gerät (1) nach Anspruch 6 oder 7, wobei Kombinationsmittel (43) für das Kombinieren der Bilder (2'), die in ihrer Höhenrichtung verschoben wurden, und der Teilbilder (2b') vorgesehen sind, um kombinierte Bilder (2, 2b) auszubilden, wobei die kombinierten Bilder (2, 2b) über das optische System (9) übertragbar sind.

9. Gerät (1) nach Anspruch 7, wobei die Lichtmustererzeugungsmittel (42) mit Steuerungsmitteln (46) verbunden sind, wobei die Steuerungsmittel (46) ausgelegt sind, Lichtmusterparameter festzulegen.

10. Gerät (1) nach Anspruch 9, wobei die Steuerungsmittel (46) mit einem Bildanalysator (36) verbunden sind, der für eine Analyse von Bilddaten ausgelegt ist, und wobei die Steuerungsmittel (46) ausgelegt sind, den Lichtmustererzeugungsmitteln (42) Steuersignale als eine Funktion des Ergebnisses einer Analyse der Bilddaten zu übermitteln, welche durch den Bildanalysator (36) bereitgestellt werden.

11. Gerät (1) nach Anspruch 9, wobei die Steuerungsmittel (46) mit einem Audiosignalanalysator (40) verbunden sind, der für eine Analyse von Audiodaten ausgelegt ist, und wobei die Steuerungsmittel (46) ausgelegt sind, den Lichtmustererzeugungsmitteln (42) Steuersignale als eine Funktion des Ergebnisses einer Analyse der Audiodaten zu übermitteln, welche durch den Audiosignalanalysator (40) bereitgestellt werden.

12. Gerät (1) nach Anspruch 1, wobei das Gerät (1) als ein Standgerät zum Aufstellen in einem Raum (5) konstruiert ist.

## Revendications

1. Dispositif (1) pour projeter des images (2) sur une surface de projection (3), lequel dispositif (1) a des moyens électro-optiques (29) pour générer et émettre de la lumière sur la base des données de l'image, un système optique (9) pour projeter un faisceau de lumière porteur d'image, et des moyens (8') pour dévier le faisceau de lumière sur une surface de projection (3), **caractérisé en ce que** lesdits moyens de déviation (8') comprennent une section déviante (8a) pour la projection de l'image et une section (8b) transmettant la lumière pour la projection de lumière d'atmosphère, chacune desdites sections (8a, 8b) interceptant une portion respective différente du faisceau de lumière.

2. Dispositif (1) selon la revendication 1, dans lequel les moyens de déviation (8') sont mobiles entre deux positions fondamentales de fonctionnement (A, B), seule la section de déviation (8a) pour la projection de l'image étant active dans une première position fondamentale de fonctionnement (A) et la section séparée de transmission de lumière (8b) pour la projection de lumière d'atmosphère étant active en plus de la section de déviation (8a) pour la projection d'image dans l'autre position fondamentale de fonctionnement (B).

3. Dispositif (1) selon la revendication 1, dans lequel les moyens de déviation (8') comprennent un miroir déviant (8) pivotant dans lequel la section de déviation (8a) est conçue pour réfléchir et est adjacente à la section séparée (8b) de transmission de lumière.

4. Dispositif (1) selon la revendication 3, dans lequel la section séparée (8b) de transmission de lumière est formée par un miroir semi-transparent.

5. Dispositif (1) selon la revendication 1, dans lequel la section séparée (8b) de transmission de lumière est sous la forme d'un élément réfractif.

6. Dispositif (1) selon la revendication 1, dans lequel les moyens électro-optiques (29) ont des moyens de déplacement d'image (44) pour le déplacement électronique des images (2') étant projetées dans la direction de la hauteur de ces dernières.

7. Dispositif (1) selon la revendication 1, dans lequel les moyens électro-optiques (29) ont des moyens de génération de motif lumineux (42) pour générer des images partielles (2b') pour la projection de la lumière d'atmosphère.

8. Dispositif (1) selon la revendication 6 ou 7, dans lequel des moyens de combinaison (43) sont fournis pour combiner les images (2') qui ont été déplacées dans la direction de leur hauteur et les images partielles (2b') pour former des images combinées (2, 2b), lesquelles images combinées (2, 2b) sont transmissibles via le système optique (9).

9. Dispositif (1) selon la revendication 7, dans lequel les moyens de génération de motif lumineux (42) sont connectés à des moyens de commande (46), lesquels moyens de commande (46) sont conçus pour régler les paramètres de motif lumineux.

10. Dispositif (1) selon la revendication 9, dans lequel les moyens de commande (46) sont connectés à un analyseur d'image (36) conçu pour analyser des données d'image, et dans lequel les moyens de commande (46) sont conçus pour transmettre des signaux de commande aux moyens de génération de motif lumineux (42), en fonction du résultat d'une analyse des données de l'image, qui est fourni par l'analyseur d'image (36).

11. Dispositif (1) selon la revendication 9, dans lequel les moyens de commande (46) sont connectés à un analyseur de signal audio (40) qui est conçu pour analyser des données audio, et dans lequel les moyens de commande (46) sont conçus pour transmettre les signaux de commande aux moyens de génération de motif lumineux (42), en fonction du résultat d'une analyse des données audio, qui est fourni par l'analyseur de signal audio (40).

12. Dispositif (1) selon la revendication 1, dans lequel le dispositif (1) est construit comme une unité reposant sur le sol pour être monté dans une pièce (5).
